(19) **Europäisches Patentamt / European Patent Office / Office européen des brevets**

(11) **EP 2 110 643 A1**

(12) **EUROPEAN PATENT APPLICATION**

(43) Date of publication:
**21.10.2009 Bulletin 2009/43**

(51) Int Cl.:
**G01D 5/244** (2006.01)

(21) Application number: **08464005.1**

(22) Date of filing: **15.04.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (71) Applicant: **Continental Automotive GmbH**<br>**30165 Hannover (DE)**<br><br>(72) Inventor: **Budianu, Bogdan**<br>**700731 Lasi (RO)** |

(54) **System and method for determining an angle offset of a rotation angle sensor and system and method for providing a corrected rotation angle information**

(57) The invention provides a system and a method for determining an angle offset ($\varepsilon$) of a rotation angle sensor (1), wherein the angle sensor is adapted to convert an angular position into a first output signal (7) representing the sine of a first rotation angle ($\alpha$) related to the angular position, and into a second output signal representing the cosine of a second rotation angle ($\alpha+\varepsilon$) related to the angular position, with the second angle being the sum of the first rotation angle ($\alpha$) and the angle offset($\varepsilon$). The angle offset ($\varepsilon$) is determined by acquiring (15) for each of a plurality of different angular positions a value ($S_1(\alpha)$) for the first output signal (7) and a value ($S_2(\alpha,\varepsilon)$) for the second output signal (9), and by determining the angle offset ($\varepsilon$) based on the acquired pairs of values for the first and second output signals (7, 9) at the plurality of different angular positions. The thus determined angle offset ($\varepsilon$) is then used to correct an output signal of the rotation angle sensor (1) for achieving a correct rotation angle value ($\alpha$).

Fig. 7

## Description

The present invention relates to systems and methods for determining an angle offset of a rotation angle sensor, and to systems and methods for measuring a rotation angle related to an angular position. In particular, the present invention relates to systems and methods for utilizing a rotation angle sensor providing a sine signal and a cosine signal of a rotation angle indicative of an angular position measured by the rotation angle sensor.

A rotation angle sensor is a device that is used to convert an angular position into one or more electrical signals. The angular position is usually defined by means of a rotation angle, i.e. an angle being related to and characterizing a rotational position of one object relative to another object, like for instance the rotational position of a shaft relative to its recipient. A rotation angle sensor may be mechanically connected to both objects, it may also be adapted to determine the rotation angle using contactless methods like e.g. optical, electrical, magnetical, electromagnetical or the like methods.

A particular class of rotation angle sensors outputs two signals, each representing a trigonometric function corresponding to the angle related to the active angular position as measured by the rotation angle sensor. Normally, the two output signals correspond to the sine and the cosine of the rotation angle. Examples of respective rotation angle sensors are magnetic resolvers, magneto resistive bridges, optical sensors, Hall effect sensors and the like, whereby these sensors can be implemented as single turn or multiturn sensors.

In automotive engineering angle sensors are preferably used in electronic vehicle control systems, particularly for crank angle monitoring, for determining a steering angle, a wheel rotation, and a wheel angle, but also for controlling the rotor position in electric motors like e.g. those used in electronically controlled brake systems. To comply with system reliability and driving safety specifications, an accurate rotation angle determination is hereby required.

In common rotation angle sensors, however, the angle information provided by one of the two sensor output signals usually differs from the angle information provided by the other sensor output signal. In other words, the sine and cosine signal do not correspond to the sine and cosine of the same argument, i.e. the angle to be determined. Instead, the angular information provided in the sine signal differs by a constant value from the angular information provided in the cosine signal. The constant difference between the angular information of the sine and the cosine signal is in this application referred to as angle offset. Usually both sensor output signals are used for the rotation angle determination, whereby the rotation angle is typically derived by applying the inverse of the tangent function to the ratio of the sine signal and the cosine signal. An angle offset not equalling zero will therefore result in uncertainties in the determination of the rotation angle.

It is therefore an object of the present invention to provide a more reliable rotation angle determination.

The above object is achieved by the invention as defined in the independent claims.

The invention comprises a method for determining an angle offset of a rotation angle sensor, wherein the angle sensor is adapted to convert an angular position into a first output signal representing the sine of a first rotation angle related to the angular position, and into a second output signal representing the cosine of a second rotation angle related to the angular position, with the second angle being the sum of the first rotation angle and the angle offset. The method comprises steps for acquiring for each of a plurality of different angular positions a value for the first output signal and a value for the second output signal, and for determining the angle offset based on the acquired pairs of values for the first and second output signals at the plurality of different angular positions.

It should be noted in this context that the terms "comprise", "include", "having", and "with", as well as grammatical modifications thereof used in this specification or the claims, indicate the presence of technical features like stated components, figures, integers, steps or the like more, and do by no means preclude a presence or addition of one or more other features, particularly other components, integers, steps or groups thereof.

The invention further comprises a method for providing a corrected rotation angle value of an angular position converted by a rotation angle sensor adapted to convert an angular position into a first output signal representing the sine of a first rotation angle related to the angular position, and into a second output signal representing the cosine of a second rotation angle related to the angular position, with the second angle being the sum of the first rotation angle and the angle offset. The method comprises steps for determining an angle offset of the rotation angle sensor according to the above indicated method, for acquiring the first output signal and the second output signal for the angular position converted by the rotation angle sensor, for correcting the second output signal using the afore determined angle offset, and for determining the rotation angle based on the acquired first output signal and the corrected second output signal.

Further, the invention comprises an apparatus for determining an angle offset of a rotation angle sensor, with the rotation angle sensor being adapted to convert an angular position into a first output signal representing the sine of a first rotation angle related to the angular position, and into a second output signal representing the cosine of a second rotation angle related to the angular position, with the second angle being the sum of the first rotation angle and the angle offset. The apparatus comprises at least one input port for receiving the first output signal and the second output signal from the rotation angle sensor, and a processing means that is adapted to acquire for each of a plurality of different angular positions a value for the first output signal and a value for the second output signal via the at least one input port, and to determine the angle offset based on the acquired pairs of values for the first and second output signals at the plurality of different angular positions according to a method for determining an angle offset of a rotation angle sensor as describe above.

The invention also comprises an apparatus for providing a corrected rotation angle value of an angular position converted by a rotation angle sensor being adapted to convert an angular position into a first output signal representing the sine of a first rotation angle related to the angular position, and into a second output signal representing the cosine of a second rotation angle related to the angular position, with the second angle being the sum of the first rotation angle and the angle offset. The apparatus comprises a rotation angle processing apparatus having at least one input port for receiving the first output signal and the second output signal from the rotation angle sensor, and at least one further port for retrieving the angle offset value from a memory device, whereby the rotation angle processing apparatus is adapted to process the first sensor output signal and the second sensor output signal using the angle offset value according to the method for providing a corrected rotation angle value of an angular position converted by a rotation angle sensor as described above.

Advantageous embodiments of the present invention are the subject of other claims.

A determination of the angle offset advantageously comprises a further step for determining an offset error signal based on the values obtained for the first and second sensor output signals at different angular positions such, that the offset error signal represents the sum of the squares of the first sensor output signal and the second sensor output signal. This enables a determination of the angle offset from the angular dependent variation of the offset error signal values. The determination of the offset error signal may be performed concurrently with the acquisition of the first and second output signals. It may alternatively also be performed after the first and second signals have been obtained. Further, a first determination of the offset error signal may be refined by acquiring additional fist and second output signals at angular positions being different to those used for the first determination.

For a quick determination of the angle offset, the method may advantageously comprise a further step for determining the difference between the maximum value and the minimum value of the offset error signal. When using a digitalized representation of the first and second sensor output signals, the step for determining the difference between the maximum value and the minimum value of the offset error signal preferably comprises an approximation of a trigonometric function to the offset error signal, since the offset error signal takes on the form of a trigonometric function for the first output signal representing the sine and the second output signal representing the cosine of a respective rotation angle, and the approximation allows to reduce the number of signal acquisitions and improves the accuracy of the maximum and minimum determination.

To effectively evaluate the sign of the angle offset, the determination of the angle offset comprises a further step for determining the sign of the angle offset based on a determination of the gradient of the offset error signal at a given rotation angle. Hereby, the gradient of the offset error signal may be favourably determined at one or more rotation angles where either the first output signal or the second output signal has a maximum value, and in particular at rotation angles close to -180 degrees, -90 degrees, 0 degrees, 90 degrees, and/or 180 degrees.

To keep the determined angle offset available for later use, the method for determining the angle offset of a rotation angle sensor advantageously comprises a further step for storing a representation of the determined angle offset. This can be achieved by an analog circuit, such as a sample-and-hold element, or may comprise the transformation of an angle offset signal by an analog-to-digital converter, and storing a digital representation of the angle offset in an memory device.

Further features of the invention will be apparent from the description of embodiments of the invention together with the claims and the attached figures. Embodiments of the invention may implement single features or several features in combination. In the following description, the present invention is explained in more detail with respect to special embodiments and in relation to the enclosed drawings, in which

Figure 1 schematically illustrates a rotation angle sensor having an angle offset,

Figure 2 shows a flow chart illustrating method steps for determining the angle offset of a rotation angle sensor according to Figure 1;

Figure 3 shows a diagram illustrating output signals of a rotation angle sensor according to Figure 1 together with a signal derived from the output signals and containing the angle offset information;

Figure 4A shows a diagram illustrating output signals obtained from an angle sensor according to Figure 1, and the offset error signal derived from the output signals for a positive angle offset,;

Figure 4B shows a diagram illustrating output signals obtained from an angle sensor according to Figure 1, and the signal derived from the output signals for a negative angle offset;

Figure 5 shows a flow chart illustrating method steps for determining a rotation angle using the angle offset determined according to a method illustrated in Figure 2;

Figure 6 shows a schematic representation of an apparatus for determining an angle offset; and

Figure 7 shows a schematic representation of an apparatus for measuring an angle.

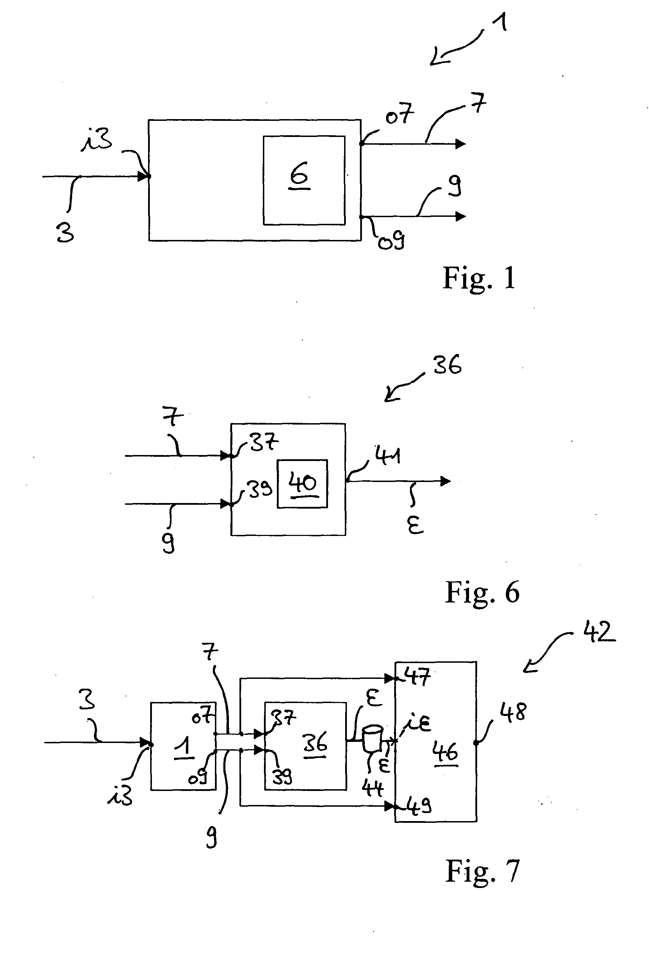

Figure 1 illustrates a rotation angle sensor 1, which output signals do not represent the same angular information. The rotation angle sensor 1 transforms an angular position 3 provided via a mechanical or contactless link-up as described above, and converts it into a first output signal 7 and into a second output signal 9, respectively provided at output ports o7 and o9.

The transformation usually takes place in two stages, with the first stage providing a first raw signal $\tilde{S}_1(\alpha)$ and a second raw signal $\tilde{S}_2(\alpha, \varepsilon)$ according to the following equations (1) and (2) :

$$\tilde{S}_1(\alpha) = \text{Off}_{sin} + A_{sin} \sin(\alpha) \quad (1)$$

$$\tilde{S}_2(\alpha, \varepsilon) = \text{Off}_{cos} + A_{cos} \cos(\alpha + \varepsilon), \quad (2)$$

wherein $\alpha$ represents the angle related to the rotational position measured by the rotation angle sensor 1, $\text{Off}_{sin}$ represents the rotation angle independent offset term of the first raw signal, $\text{Off}_{cos}$ represents the rotation angle independent offset term of the second raw signal, and $\varepsilon$ represents the angle offset between the angle information of the second and the first raw signal. $A_{sin}$ and $A_{cos}$ are the amplitude values of the respective rotation angle dependent terms of the first and the second raw signal.

The angle sensor 1 illustrated in Figure 1 comprises a normalizing system 6 eliminating in the second stage of the conversion the rotation angle independent offset terms and normalizing the amplitude values. Accordingly, the first output signal 7 and the second output signal 9 are respectively described by signals $S_1(\alpha)$ and $S_2(\alpha, \varepsilon)$ according to the equations (3) and (4) given below:

$$S_1(\alpha) = \sin(\alpha) \quad (3)$$

$$S_2(\alpha, \varepsilon) = \cos(\alpha + \varepsilon) \quad (4)$$

The first output signal, given in equation (3), corresponds to an electrical representation of the sine of the rotation angle $\alpha$ corresponding to the respective angular position. The second output signal, given in equation (4), corresponds to the electrical representation of the cosine of an angle formed by the sum of rotation angle $\alpha$ and the angle offset $\varepsilon$.

The angle offset $\varepsilon$ is due to tolerances of the transformers used in sensor 1. Its value is usually different from zero. If an angle determination based on the two output signals does not account for the angle offset $\varepsilon$, the result will be an inaccurate determination of the rotation angle $\alpha$.

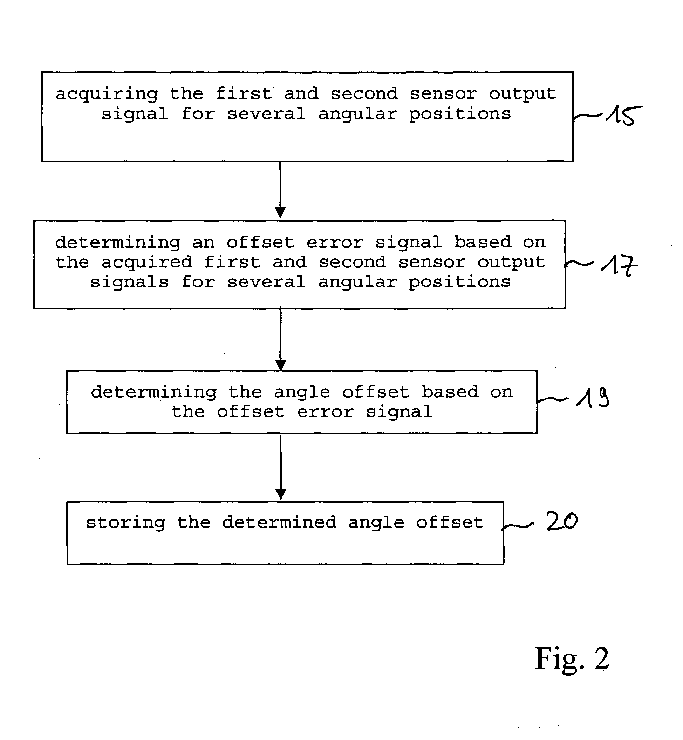

Figure 2 shows a flow chart illustrating steps of a method for determining the angle offset $\varepsilon$. The method starts with step 15, upon which values for the first output signal $S_1(\alpha)$ and the second output signal $S_2(\alpha,\varepsilon)$ are acquired at several, i.e. at a plurality of different angular positions. The output signals may be acquired continuously or discreetly. Further, the number of output signal value pairs $S_1(\alpha)$ and $S_2(\alpha,\varepsilon)$ may be limited to a given number, like for instance 2, 3, 4 or more, whereby the number is chosen according to the particular characteristics of the rotation angle sensor 1 used and according to the desired accuracy for the determination of the angle offset $\varepsilon$. Following method step 15, the acquired output signals or signal values are processed to provide an offset error signal $S(\alpha,\varepsilon)$ conforming the following

equation:

$$S\left(\alpha , \varepsilon\right) = S_1^{\ 2}(\alpha_i) + S_2^{\ 2}\left(\alpha , \varepsilon\right). \quad (5)$$

In other words, the offset error signal $S(\alpha,\varepsilon)$ is formed by summing up the first output signal $S_1(\alpha)$ multiplied by itself and the second output signal $S_2(\alpha,\varepsilon)$ multiplied by itself. The offset error signal $S(\alpha,\varepsilon)$ can be generated by analogue or digital signal processing, e.g. by a respective use of an analog circuit or computer. In method step 19, the angle offset $\varepsilon$ is determined based on the offset error signal $S(\alpha,\varepsilon)$ obtained in method step 15. In the following step 20, the determined angle offset $\varepsilon$ is stored in order to be used for correcting the angular information content of the rotation angle sensor output signals when required.

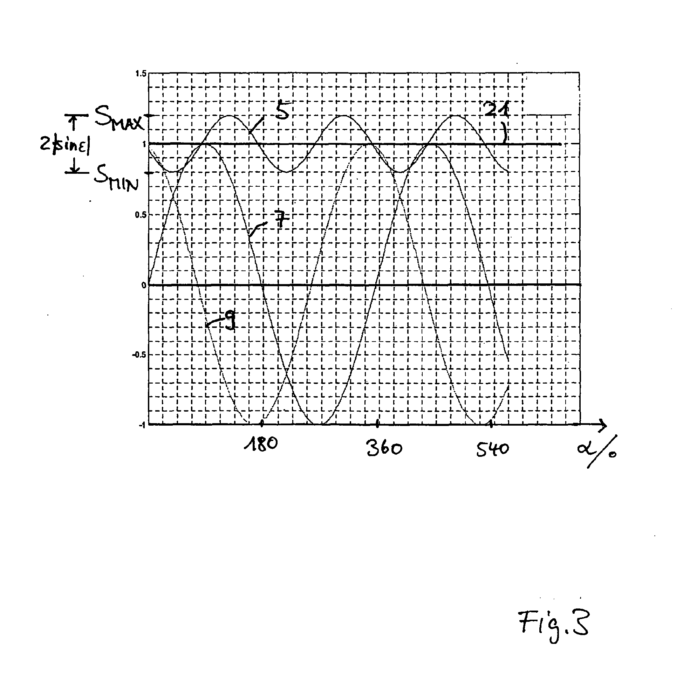

Figure 3 shows a diagram illustrating the output signals 7 and 9, i.e. $S_1(\alpha)$ and $S_2(\alpha,\varepsilon)$, obtained with an angle sensor according to Figure 1. The diagram further shows the offset error signal 5, i.e. $S(\alpha,\varepsilon)$, generated from the two output signals according to the above described. The rotation angle $\alpha$ is assigned to the abscissa, and the signal values are assigned to the ordinate. Graph 7 corresponds to the first output signal $S_1(\alpha)$ and graph 9 to the second signal $S_2(\alpha,\varepsilon)$. Graph 9 represents the sine of the rotation angle having a periodicity of 360 degrees. Graph 9 follows a cosine function of the rotation angle $\alpha$ shifted according to an angle offset $\varepsilon$ of 5 degrees. Graph 9 also has a periodicity of 360 degrees with respect to the rotation angle.

If the angle offset $\varepsilon$ would be zero, the offset error signal $S(\alpha,\varepsilon)$ would show a constant value of one, indicated by line 21 in the diagram of Figure 3. For angle offsets different to zero, the offset error signal $S(\alpha,\varepsilon)$ takes on a periodic run, with a periodicity of 180 degrees with respect to the rotation angle, that is half of that of the sensor output signals 7 and 9. This is best understood by rearranging the representation of $S(\alpha,\varepsilon)$ given in equation (5) as shown below:

$$S\left(\alpha , \varepsilon\right) = 1 - \sin(\varepsilon) \sin\left(2\alpha + \varepsilon\right) \quad (6)$$

As can be understood from equation (6), the offset error signal $S(\alpha,\varepsilon)$ is composed of a constant term and a harmonic term with a periodicity of 180 degrees as illustrated by graph 5 of Figure 3. The amplitude of the offset error signal $S(\alpha,\varepsilon)$ is given by $\sin(\varepsilon)$. The harmonic term further shows an angular offset taking on the value of $\varepsilon$.

Thus, the difference between the maximum and the minimum value of the offset error signal $S(\alpha,\varepsilon)$, i.e. its variation, corresponds to the twofold of the absolute value of $\sin(\varepsilon)$. By determining the variation of the offset error signal $S(\alpha,\varepsilon)$, the absolute value of the angle offset $\varepsilon$ can correspondingly be determined. The sign of the angle offset $\varepsilon$ however is not derivable from the signal variation.

To derive the sign of the angle offset $\varepsilon$ a derivative of the offset error signal $S(\alpha,\varepsilon)$ as indicated in equation (7) below is used:

$$\frac{dS}{d\alpha} = -\sin(\alpha) \cos(2\alpha + \varepsilon)2 \quad (7)$$

with $\alpha$ = 90 degrees equation (7) reads as follows:

$$\frac{dS}{d\alpha}\left(\tfrac{\pi}{2}\right) = -\sin(\varepsilon) \cos\left(2\tfrac{\pi}{2} + \varepsilon\right)2 = \sin(2\varepsilon) \quad (8)$$

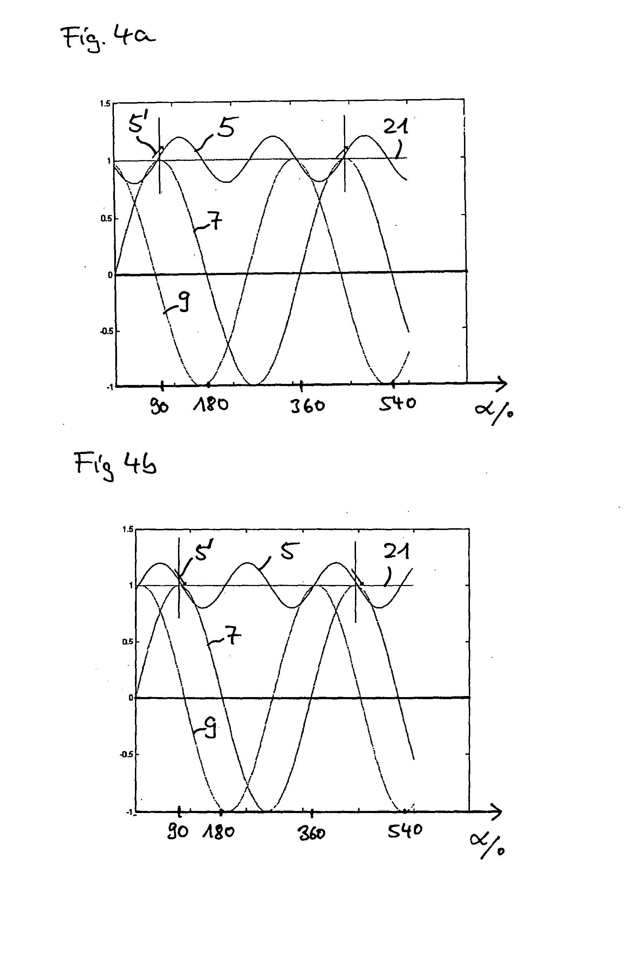

The diagram of Figure 4A shows the offset error signal $S(\alpha,\varepsilon)$ (graph 5) obtained from the first and second sensor output signals 7 and 8 upon a positive value for the angle offset $\varepsilon$. Likewise, the diagram of Figure 4B shows the offset error signal $S(\alpha,\varepsilon)$ obtained from the first and second sensor output signals 7 and 8 upon a negative value for the angle offset ε. The respective gradients of the offset error signal S(α,ε) at a rotation angle α of 90 degrees are in both Figures indicated by arrows 5'.

As can be seen in Figure 4A, the arrow 5' representing the gradient of graph 5 at α = 90 degrees points upwards, indicating that the derivative of the offset error signal S(α,ε) is positive at this angle value, as is the sign of the angle offset ε. In Figure 4B, the arrow 5' representing the gradient of graph 5 at α = 90 degrees points downwards, indicating that the derivative of the offset error signal S(α,ε) is negative at this angle value, as is the sign of the angle offset ε in this case.

The sign of the angle offset can be reliably determined around the middle of the offset error signal S(α,ε) between its respective maximum and minimum values. Since these regions correspond to a maximum value of either the first sensor output signal 7 or that of the second sensor output signal 9, the region for determining the gradient of the offset error signal S(α,ε) can be determined from the sensor output signals themselves.

Using the first sensor signal as shown in Figures 4A and 4B, the gradient and thus the sign of the angle offset ε are best obtained at rotation angles α in the vicinity of -180 degrees, -90 degrees, 0 degrees, 90 degrees, and/or 180 degrees.

Several methods can be used to determine the angle offset ε from the offset error signal S(α,ε). If the latter is available in form of a specific number of value pairs representing the sensor output signals 7 and 8 for different rotation angles α, an approximating function or an interpolating function may be determined from the value pairs to enable a correct determination of variation of the offset error signal S(α,ε) and its gradient for a rotation angle of 90 degrees even then, when the no measurement values or respectively sensor output values are available for this particular rotation angle. The use of an approximation or an interpolating function allows a determination of the angle offset ε with a minimum of sensor signal values.

If the first and second sensor signals are available in an analogous form, the offset error signal S(α,ε) can be generated by an analogue signal processing circuitry comprising the required multiplying elements and an adder element. The variation of the offset error signal S(α,ε) can for instance be obtained by using a sample-and-hold circuitry, and the sign of the angle offset can be obtained by means of a differentiating circuit. The angle offset value may then be made available in form of a voltage having an absolute value and sign corresponding to the thus determined angle offset.

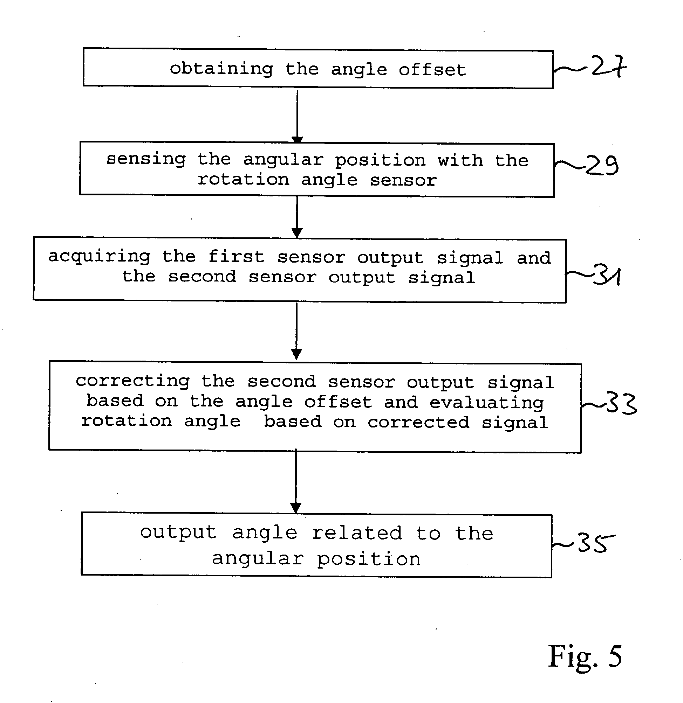

With the angle offset ε determined according to the above explained, an accurate determination of the rotation angle α from the first and the second sensor output signals 7 and 8 can be achieved. A corresponding method for determining the correct rotation angle is illustrated in the flow chart of Figure 5. The method starts with step 27, where the angle offset ε is determined. If the angle offset has already been determined, step 27 may alternatively comprise an acquisition of a stored angle offset value. In the following step 29, an angular position to be measured is set if required, with the angular position being converted by the rotation angle sensor 1 into the sensor output signals $S_1(\alpha)$ and $S_2(\alpha, \varepsilon)$. The first $S_1(\alpha)$ and second $S_2(\alpha,\varepsilon)$ sensor output signals are then acquired in step 31. Following the acquisition, the second sensor output signal $S_2(\alpha,\varepsilon)$ is corrected in step 33 based on the value for the angle offset obtained in step 21 and the first sensor output signal $S_1(\alpha)$ according to the relation:

$$S_{2,\text{corrected}}(\alpha) = \frac{S_2(\alpha, \varepsilon) + S_1(\alpha) \sin(\varepsilon)}{\cos(\varepsilon)} \quad , \qquad (9)$$

wherein $S_{2,\text{corrected}}(\alpha)$ represents the corrected second sensor output signal. The rotation angle is then determined from the corrected second sensor output signal $S_{2,\text{corrected}}(\alpha)$ and the first sensor output signal $S_1(\alpha)$ using conventional methods as e.g. explained above and output in step 35 as illustrated in Figure 5.

Figure 6 shows a schematic representation of an apparatus 36 for determining the angle offset of a rotation angle sensor 1. The apparatus 36 comprises a first input port 37 for receiving the first sensor output signal 7 ($S_1(\alpha)$) and a second input port 39 for receiving the second sensor output signal 9 ($S_2(\alpha,\varepsilon)$), both sensor signals being provided by the rotation angle sensor 1. The apparatus 36 further comprises a processing means 40 adapted to determine the angle offset ε based on first sensor output signals 7 and second sensor output signals 9 received for a plurality of different angular positions sensed by the rotation angle sensor 1. The angle offset ε determined by the processing means 40 is output via output port 41 of the apparatus 36.

Figure 7 illustrates a system 42 for accurately determining a rotation angle related to an angular position 3 measured with a rotation angle sensor 1. The angle sensor 1 provides a first sensor output signal 7 at its output port o7 and a second sensor output signal 9 at its output port o9. The first sensor output signal 7 is supplied to the input port 37 of apparatus 36 for determining an angle offset and the second sensor output signal 9 is supplied to input port 39 of apparatus 36. The angle offset ε determined by apparatus 36 is stored in memory device 44, e.g. in a database present on that device.

The first and second sensor output signals 7 and 9 are further supplied to respective input ports 47 and 49 of a rotation angle processing apparatus 46. The rotation angle processing apparatus 46 is further provided with a port iε adapted for accessing the memory device 44 in order to retrieve the required angle offset value ε. The rotation angle processing apparatus 46 is adapted to determine the rotation angle α corresponding to a current angular position sensed by the rotation angle sensor by employing a sensor output signal correction as explained above. The thus determined accurate rotation angle value α is provided at the output port 48 of the rotation angle processing apparatus 46.

While the invention has been described with respect to certain specific embodiments, it is evident that many alternatives, modifications and variations will be apparent to those skilled in the art. In particular, it is understood that the first sensor output signal 7 may be regarded as the one having an offset angle ε' thus resulting in the correction being applied to the first sensor output signal $S_1(\alpha',\varepsilon')$, whereby the correct signal processing can be deduced by simply substituting $\alpha+\varepsilon$ with $\alpha'$ and accordingly $\alpha$ with $\alpha'+\varepsilon'$. Further, when determining the absolute value of ε rom the variation of the offset error signal, sine(ε) can be equated with ε for small angle offsets. Accordingly, the preferred embodiments of the invention set forth herein are intended to be illustrative and not limiting in any way. Various changes may be made without departing from the spirit and scope of the present invention as defined in the following claims.

List of Reference Signs

| | |
|---|---|
| 1 | angle sensor |
| 3 | angular position |
| 5 | graph of offset error signal |
| 5' | first derivative of offset error signal at rotation angle $\alpha$ of 90 degree |
| 6 | normalization system |
| 7 | first sensor output signal |
| 9 | second sensor output signal |
| 15 | first step of method for determining the angle offset |
| 17 | second step of method for determining the angle offset |
| 19 | third step of method for determining the angle offset |
| 20 | fourth step of method for determining the angle offset |
| 27 | first step of method for determining rotation angle |
| 29 | second step of method for determining rotation angle |
| 31 | third step of method for determining rotation angle |
| 33 | fourth step of method for determining rotation angle |
| 35 | fifth step of method for determining rotation angle |
| 36 | apparatus for determining an angle offset |
| 37 | apparatus input port for first sensor output signal |
| 39 | apparatus input port for second sensor output signal |
| 40 | processing means of apparatus |
| 41 | apparatus output port |
| 42 | apparatus for measuring a rotation angle |
| 44 | memory device |
| 46 | rotation angle processing apparatus |
| 47 | input port of rotation angle processing apparatus for the first sensor output signal |
| 49 | input port of rotation angle processing apparatus for the second sensor output signal |
| 48 | output port of rotation angle processing apparatus |
| i3 | sensing port of rotation angle sensor |
| o7 | output port of rotation angle sensor for the first sensor output signal |
| o9 | output port of rotation angle sensor for the second sensor output signal |
| $S_{MAX}$ | maximum value of offset error signal |
| $S_{MIN}$ ε | minimum value of offset error signal angle offset |

**Claims**

1. A method for determining an angle offset (ε) of a rotation angle sensor (1), wherein the angle sensor is adapted to convert an angular position into

- a first output signal (7) representing the sine of a first rotation angle ($\alpha$) related to the angular position, and into
- a second output signal representing the cosine of a second rotation angle ($\alpha+\varepsilon$) related to the angular position, with the second angle being the sum of the first rotation angle ($\alpha$) and the angle offset($\varepsilon$), and wherein the method comprises steps for
- acquiring (15) for each of a plurality of different angular positions a value ($S_1(\alpha)$) for the first output signal (7) and a value ($S_2(\alpha,\varepsilon)$) for the second output signal (9), and for
- determining (19) the angle offset ($\varepsilon$) based on the acquired pairs of values for the first and second output signals (7, 9) at the plurality of different angular positions.

2. The method according to claim 1, wherein the determination of the angle offset ($\varepsilon$) further comprises a step (17) for determining an offset error signal ($S(\alpha,\varepsilon)$) based on the values obtained for the first and second sensor output signals at different angular positions such, that the offset error signal ($S(\alpha,\varepsilon)$) represents the sum of the squares of the first sensor ($S_1(\alpha)$) output signal and the second sensor output signal ($S_2(\alpha,\varepsilon)$).

3. The method according to claim 2, wherein the determination of the angle offset ($\varepsilon$) further comprises a step for determining the difference between the maximum value and the minimum value of the offset error signal ($S(\alpha,\varepsilon)$).

4. The method according to claim 3, wherein the step for determining the difference between the maximum value and the minimum value of the offset error signal ($S(\alpha,\varepsilon)$) comprises an approximation of a trigonometric function to the offset error signal ($S(\alpha,\varepsilon)$).

5. The method according to one of claims 2 to 4, wherein the determination of the angle offset ($\varepsilon$) further comprises a step for determining the sign of the angle offset ($\varepsilon$) based on a determination of the gradient of the offset error signal ($S(\alpha,\varepsilon)$) at a given rotation angle ($\alpha$).

6. The method according to claim 5, wherein the gradient of the offset error signal ($S(\alpha,\varepsilon)$) is determined at one or more rotation angles ($\alpha$) where either the first output signal (7) or the second output signal (9) has a maximum value, and in particular at rotation angles ($\alpha$) close to -180 degrees, -90 degrees, 0 degrees, 90 degrees, and/or 180 degrees.

7. The method according to one of the preceding claims, further comprising a step for storing a representation of the determined angle offset ($\varepsilon$).

8. A method for providing a corrected rotation angle value ($\alpha$) of an angular position converted by a rotation angle sensor (1) adapted to convert an angular position into a first output signal (7) representing the sine of a first rotation angle ($\alpha$) related to the angular position, and into a second output signal representing the cosine of a second rotation angle ($\alpha+\varepsilon$) related to the angular position, with the second angle being the sum of the first rotation angle ($\alpha$) and the angle offset($\varepsilon$), the method comprising steps for

- determining an angle offset ($\varepsilon$) of the rotation angle sensor (1) according to one of claims 1 to 7;
- acquiring the first output signal (7) and the second output signal (9) for the angular position converted by the rotation angle sensor (1);
- correcting the second output signal (9) using the afore determined angle offset ($\varepsilon$), and
- determining the rotation angle ($\alpha$) based on the acquired first output signal (7) and the corrected second output signal (9).

9. An apparatus for determining an angle offset ($\varepsilon$) of a rotation angle sensor (1); with the rotation angle sensor (1) being adapted to convert an angular position into

- a first output signal (7) representing the sine of a first rotation angle ($\alpha$) related to the angular position, and into
- a second output signal representing the cosine of a second rotation angle ($\alpha+\varepsilon$) related to the angular position, with the second angle being the sum of the first rotation angle ($\alpha$) and the angle offset($\varepsilon$), and wherein the apparatus comprises at least one input port (37, 39) for receiving the first output signal (7) and the second output signal (9) from the rotation angle sensor (1), and a processing means (40) being adapted to
- acquire (15) for each of a plurality of different angular positions a value ($S_1(\alpha)$) for the first output signal (7) and a value ($S_2(\alpha,\varepsilon)$) for the second output signal (9) via the at least one input port (37, 39), and to
- determine the angle offset ($\varepsilon$) based on the acquired pairs of values for the first and second output signals (7, 9) at the plurality of different angular positions according to a method of one of claims 1 to 7.

**10.** An apparatus for providing a corrected rotation angle value ($\alpha$) of an angular position converted by a rotation angle sensor (1) being adapted to convert an angular position into a first output signal (7) representing the sine of a first rotation angle ($\alpha$) related to the angular position, and into a second output signal representing the cosine of a second rotation angle ($\alpha+\varepsilon$) related to the angular position, with the second angle being the sum of the first rotation angle ($\alpha$) and the angle offset($\varepsilon$), the apparatus comprising a rotation angle processing apparatus (46) having at least one input port (47, 48) for receiving the first output signal (7) and the second output signal (9) from the rotation angle sensor (1), and at least one further port for retrieving the angle offset value ($\varepsilon$) from a memory device, whereby the rotation angle processing apparatus (46) is adapted to process the first sensor output signal (7) and the second sensor output signal (9) using the angle offset value ($\varepsilon$) according to the method of claim 8.

Fig. 1

Fig. 6

Fig. 7

acquiring the first and second sensor output signal for several angular positions  ~15

determining an offset error signal based on the acquired first and second sensor output signals for several angular positions  ~17

determining the angle offset based on the offset error signal  ~19

storing the determined angle offset  ~20

Fig. 2

Fig.3

Fig. 4a

Fig 4b

obtaining the angle offset ~27

sensing the angular position with the rotation angle sensor ~29

acquiring the first sensor output signal and the second sensor output signal ~31

correcting the second sensor output signal based on the angle offset and evaluating rotation angle based on corrected signal ~33

output angle related to the angular position ~35

Fig. 5

Europäisches
Patentamt

European
Patent Office

Office européen
des brevets

# EUROPEAN SEARCH REPORT

Application Number

EP 08 46 4005

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 102 60 862 A1 (BOSCH GMBH ROBERT [DE]) 15 July 2004 (2004-07-15) | 1,2,7-10 | INV. G01D5/244 |
| Y | * the whole document * | 1-10 | |
| X | WO 95/24612 A (IBM [US]; KALLMEYER MICHAEL [DE]; SONNTAG HARALD [DE]; SIEBER WOLFGANG) 14 September 1995 (1995-09-14) | 1,2,7-10 | |
| Y | * pages 7-10; figures 1,5 * | 1-10 | |
| X | DE 100 34 733 A1 (SIEMENS AG [DE]) 15 February 2001 (2001-02-15) | 1,7-10 | |
| Y | * columns 2-6 * | 1-10 | |

TECHNICAL FIELDS
SEARCHED      (IPC)

G01D

The present search report has been drawn up for all claims

| Place of search | Date of completion of the search | Examiner |
|---|---|---|
| Munich | 4 November 2008 | Kallinger, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 46 4005

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2008

| Patent document cited in search report | | Publication date | Patent family member(s) | Publication date |
|---|---|---|---|---|
| DE 10260862 | A1 | 15-07-2004 | NONE | |
| WO 9524612 | A | 14-09-1995 | NONE | |
| DE 10034733 | A1 | 15-02-2001 | NONE | |